Europäisches Patentamt

European Patent Office

Office européen des brevets

(19)

(11) Numéro de publication : **0 376 764 B1**

(12) # FASCICULE DE BREVET EUROPEEN

(45) Date de publication du fascicule du brevet :
04.12.91 Bulletin 91/49

(51) Int. Cl.⁵ : **B60J 10/06**

(21) Numéro de dépôt : **89402978.4**

(22) Date de dépôt : **27.10.89**

(54) **Profilé pour le guidage et l'étanchéité d'une glace mobile, notamment de porte d'automobile, et son procédé de fabrication.**

(30) Priorité : 08.11.88 FR 8814566

(43) Date de publication de la demande :
04.07.90 Bulletin 90/27

(45) Mention de la délivrance du brevet :
04.12.91 Bulletin 91/49

(84) Etats contractants désignés :
BE DE ES GB IT NL SE

(56) Documents cités :
EP-A- 0 301 942
FR-A- 2 247 341
FR-A- 2 257 008
GB-A- 2 188 082

(73) Titulaire : **ETABLISSEMENTS MESNEL SOCIETE ANONYME DITE :**
**9 et 11, Rue de la Rivière**
**F-78420 Carrières-Sur-Seine (FR)**

(72) Inventeur : **Mesnel, François**
**6 bis, rue Salignac Fénelon**
**F-92200 Neuilly sur Seine (FR)**
Inventeur : **Mesnel, Gérard**
**16, rue Victor Hugo**
**F-78420 Carrières sur Seine (FR)**

(74) Mandataire : **Jolly, Jean-Pierre et al**
**Cabinet Jolly 54, rue de Clichy**
**F-75009 Paris (FR)**

**Description**

La présente invention concerne un profilé destiné à assurer le guidage et l'étanchéité d'une glace mobile, notamment de porte d'automobile. Elle concerne plus particulièrement un profilé de ce type destiné à équiper une porte d'automobile comprenant une glace du type dit affleurante.

L'invention a également pour objet un procédé de fabrication d'un tel profilé.

Dans sa demande publiée de brevet français FR-A-2596138, la Demanderesse a décrit un profilé en élastomère extrudé, comportant une armature métallique, dont une première partie formant pince est destinée à permettre sa fixation sur l'encadrement de la glace mobile et dont une seconde partie à section en U, dite "coulisse", sert d'organe de guidage et d'étanchéité pour la glace mobile. Entre ces deux parties, une troisième partie à section en U, rigidement solidaire de la première partie, peut recevoir un profilé auxiliaire formant joint d'étanchéité du type dit "lécheur", dont au moins une lèvre lèche la face externe de la glace en position fermée. Ce lécheur peut aussi faire partie intégrante du profilé.

Selon cette demande de brevet, la première partie formant pince et la seconde partie formant organe de guidage sont articulées entres elles par une charnière élastique réalisée par pliage de la portion centrale de l'armature métallique du profilé, préalablement à l'extrusion de l'élastomère sur l'armature, ce pont étant ensuite découpé, après l'extrusion, de façon telle que l'armature soit éliminée, en laissant toutefois subsister une fraction de la gaine en élastomère, qui constitue la charnière de liaison.

Dans sa demande publiée de certificat d'addition en France FR-E-2623596 ou EP-A-0318372, la Demanderesse a ensuite proposé une variante perfectionnée de ce profilé, dans laquelle la charnière élastique autorise non seulement un pivotement relatif des parties du profilé qu'elle réunit, mais également un mouvement de translation de la coulisse sensiblement dans le plan de déplacement de la glace mobile. Un tel profilé peut être réalisé de façon simple en amenant à la forme appropriée une bande métallique destinée à constituer l'armature, en découpant longitudinalement cette bande en deux fractions à un emplacement correspondant à celui de ladite charnière souple élastique et en extrudant l'élastomère simultanément sur les deux fractions de bande en position contiguë appropriée, préalablement enduites d'un agent de collage de cet élastomère sur le métal de la bande.

Cette enduction peut être effectuée avant ou après la mise en forme de la bande métallique.

Dans une mise en oeuvre en continu d'un tel procédé, le découpage de la bande métallique se fait immédiatement avant l'extrusion de l'élastomère, qui recouvre l'ensemble des deux portions de bande pour réaliser un profilé unique comprenant la charnière d'articulation et les lèvres d'étanchéité.

Le mouvement de translation de la coulisse servant d'organe de guidage de la vitre mobile se manifeste en fin de mouvement de la vitre, lorsque celle-ci arrive en position fermée, la tranche de la vitre repoussant cette partie en direction de la partie contiguë de l'encadrement, avec un mouvement simultané de pivotement par rapport à la partie formant pince, ce qui assure une étanchéité accrue de la vitre, tout en facilitant ses déplacements.

La présente invention concerne une variante de réalisation d'un tel profilé, destinée à équiper des encadrements de porte présentant une partie d'angle non arrondie à faible rayon de courbure, où il est connu de renforcer les parties correspondantes des joints d'étanchéité en surmoulant sur la lèvre d'étanchéité ou sur l'élément tubulaire auquel cette lèvre est attenante (voir la demande publiée de brevet français FR-A-2624191) une partie rapportée qui s'épanouit à la forme de l'encadrement.

Le profilé décrit dans la demande de certificat d'addition précitée FR-E-2623596 convient parfaitement à des angles d'encadrement de vitres arrondis, à grand rayon de courbure, mais ils ne sont pas parfaitement adaptés aux encadrements de vitres présentant des coins à angle aigu ou à faible rayon de courbure.

La présente invention vise à remédier à cet inconvénient en rendant les profilés de ce type aptes à épouser parfaitement la forme de la carrosserie dans les angles de tels encadrements de vitres.

L'invention vise également à proposer un profilé de ce type qui soit parfaitement apte à assurer le guidage et l'étanchéité d'une glace mobile de porte d'automobile, même lorsque l'encadrement de cette glace présente des coins à angle aigu ou à petit rayon de courbure.

A cet effet, l'invention a pour objet un profilé pour le guidage et l'étanchéité d'une glace mobile, notamment de porte d'automobile, constitué d'un élastomère extrudé sur une armature métallique et comprenant une première partie formant pince, apte à être fixée sur le profilé d'encadrement de la glace mobile, et une seconde partie à section en U, tournée en sens inverse de ladite première partie et servant d'organe de guidage et d'étanchéité pour la glace mobile, la base du U de la seconde partie comprenant une portion dépourvue d'armature métallique et formant une charnière souple élastique en ledit élastomère (Profilé du type divulgué par FR-A-2596138), ce profilé étant caractérisé en ce que la partie de l'armature de la seconde partie non attenante a l'armature de la première partie formant pince du profilé a été conformée par emboutissage, sur au moins une partie de sa longueur, à la forme de l'encadrement de glace.

Comme décrit dans la demande de certificat d'addition précitée, le profilé pourra être équipé d'un organe dit lécheur de vitre, qui constitue un élément indépendant rapporté sur le profilé et logé dans une partie à section en U à ouverture tournée en sens inverse de celle de la partie formant pince, dont elle est rigidement solidaire, ou qui fait partie intégrante du profilé et est venu d'extrusion avec celui-ci.

L'invention a également pour objet un procédé de fabrication d'un tel profilé pour le guidage et l'étanchéité d'une glace mobile, notamment de porte d'automobile, dans lequel on amène à la forme appropriée une bande métallique destinée à constituer l'armature du profilé, on découpe cette bande en deux portions à un emplacement correspondant à celui de la charnière élastique et on extrude l'élastomère simultanément sur les deux portions en position contiguë appropriée, ce procédé étant caractérisé en ce que, après durcissement de l'élastomère, on conforme par emboutissage la portion de l'armature de la seconde partie non attenante à l'armature de la partie formant pince, sur au moins une partie de sa longueur, au profil de l'encadrement de glace, notamment dans les angles de cet encadrement.

Cette opération d'emboutissage pourra en particulier s'appliquer à la portion de l'armature du profilé correspondant à au moins un angle de l'encadrement de glace.

Les dessins annexés, qui n'ont pas de caractère limitatif, illustrent une forme de mise en oeuvre de l'invention. Sur ces dessins :

La figure 1 est une vue d'une porte présentant un encadrement de glace dont un coin n'est pratiquement pas arrondi et a un faible rayon de courbure ;

La figure 2 est une coupe du profilé associé à cet encadrement de porte suivant la ligne II-II de la figure 1 ;

La figure 3 est une coupe analogue suivant la ligne III-III de la figure 1.

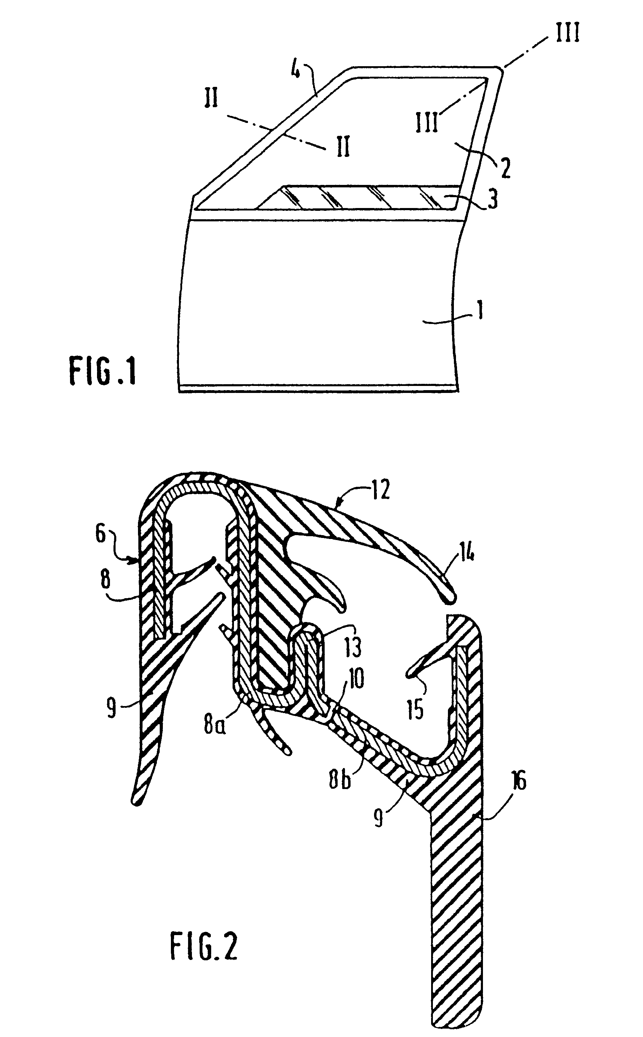

La figure 1 représente une porte d'automobile 1 munie d'une ouverture 2, que peut obturer une glace mobile 3. L'encadrement 4 de cette ouverture présente un angle aigu non arrondi, et le profilé conforme à l'invention dont il est équipé vise à assurer un guidage satisfaisant de la vitre et une bonne étanchéité, même dans cet angle 5.

Comme on le voit sur la figure 2, ce profilé comprend une partie en U, 6, formant pince, destinée à être rendue solidaire de l'encadrement 4 de la porte 1 en coiffant une feuillure de cet encadrement. Cette partie 6 est raccordée à une seconde partie en U, ou coulisse 7, servant d'organe de guidage et d'étanchéité pour la vitre mobile 3.

Les sections en U des parties 6 et 7 sont inversées l'une par rapport à l'autre.

Comme décrit dans la demande de certificat d'addition FR-E-2623596 ou EP-A-0318372 précitée, la pince 6 et la coulisse 7 comprennent une armature métallique 8 gainée d'un élastomère 9. L'armature 8 est sectionnée dans la partie correspondant à la base du U de la coulisse pour définir deux brins 8a et 8b articulés entre eux au niveau de leur séparation par une charnière 10 en élastomère, qui entraîne un pivotement du brin 8b par rapport au brin 8a et une translation de ce brin 8a lorsque la glace 3 vient prendre appui en fin de course (position où la glace est fermée) contre le fond de la coulisse 8.

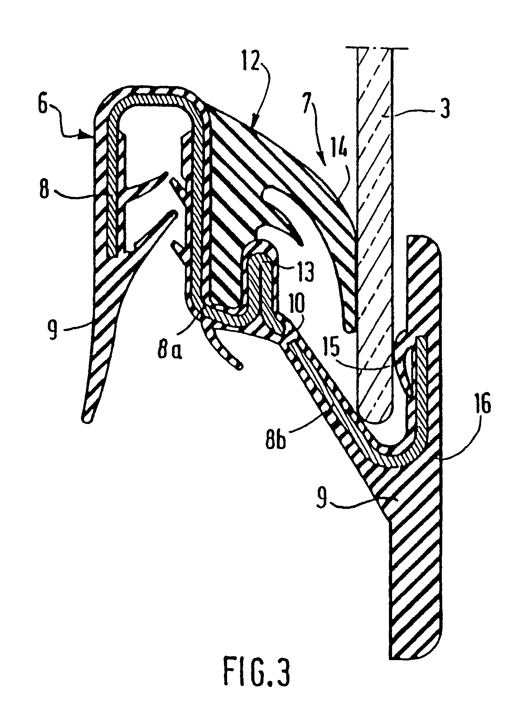

Conformément à l'invention, au moins dans la partie du profilé correspondant à l'angle 5 de l'encadrement de vitre (Figure 3), le brin 8b de l'armature non attenant à la pince 6 est conformé par emboutissage au profil de la carrosserie dans cet angle de l'encadrement. Le profilé épouse ainsi parfaitement sur toute sa longueur la forme de l'encadrement de vitre, y compris dans l'angle 5, où l'armature 8b a été déformée pour se conformer à l'encadrement, comme on le voit en comparant les figures 2 et 3. La partie du fond de la coulisse 7 est ainsi inclinée en direction de l'angle de l'encadrement de vitre et la glace 3 peut venir s'y loger aisément et de façon parfaitement étanche en position fermée.

Le profilé comprend en outre un élément d'étanchéité ou lécheur 12, attenant à la pince 6 et qu'une partie recourbée 13 de l'armature 8 ancre sur celle-ci. Une lèvre 14 de ce lécheur, comportant à sa surface des fibres floquées (non représentées), vient en contact avec la face interne de la vitre 3, en position fermée de celle-ci, tandis qu'une lèvre 15 de la coulisse, également floquée et attenante à la bande latérale 16 opposée au lécheur 10, assure l'étanchéité sur la face externe de la vitre 5.

Un tel profilé et son articulation souple 10 sont réalisés en pré-enduisant d'un agent de collage élastomère sur métal une bande continue de métal destinée à constituer l'armature, de l'aluminium par exemple, que l'on plie ensuite à la forme désirée à l'aide d'un système à galets. Juste avant d'introduire la bande ainsi conformée dans la tête d'extrusion, qui la recouvrira d'un élastomère au profil désiré, en réalisant simultanément le lécheur et les différentes lèvres, la bande métallique est découpée à l'aide d'une molette de cisaillement suivant une ligne correspondant à l'emplacement de la charnière 10.

Après l'extrusion de l'élastomère, le profilé résultant est prévulcanisé, enduit par flocage de fibres aux emplacements destinés à venir en contact avec la vitre 3 et découpé en sections élémentaires rectilignes.

Celles-ci sont ensuite conformées au profil de l'encadrement de porte et, dans les angles de celui-ci, le brin 8b de l'armature est déformé par emboutissage pour épouser la forme de cet angle.

## Revendications

1. Profilé pour le guidage et l'étanchéité d'une glace mobile (3), notamment de porte d'automobile, constitué d'un élastomère (9) extrudé sur une armature métallique (8) et comprenant une première partie formant pince (6), apte à être fixée sur le profilé d'encadrement (4) de la glace mobile, et une seconde partie à section en U (7), tournée en sens inverse de ladite première partie et servant d'organe de guidage et d'étanchéité pour la glace mobile, la base du U de la seconde partie (7) comprenant une portion dépourvue d'armature métallique et formant une charnière souple élastique (10) en ledit élastomère, ce profilé étant caractérisé en ce que la partie (8b) de l'armature de la seconde partie (7) non attenante à l'armature de la première partie (6) formant pince du profilé a été conformée par emboutissage sur au moins une partie de sa longueur à la forme de l'encadrement de glace (4).

2. Profilé selon la revendication 1, caractérisé en ce que la partie (8b) de l'armature de la seconde partie (7) non attenante à la partie (8a) de l'armature de la première partie (6) du profilé a été conformée par emboutissage à la forme d'au moins un angle (5) de l'encadrement de porte.

3. Procédé de fabrication d'un profilé selon la revendication 1, dans lequel on amène à la forme appropriée une bande métallique (8) destinée à constituer l'armature, du profilé, on découpe cette bande en deux portions (8a, 8b) à un emplacement correspondant à celui de la charnière élastique (10) et on extrude l'élastomère (9) simultanément sur les deux portions (8a, 8b) en position contiguë appropriée, ce procédé étant caractérisé en ce que, après durcissement de l'élastomère, on conforme par emboutissage la portion (8b) de l'armature de la seconde partie (7) non attenante à l'armature de la partie formant pince, sur au moins une partie de sa longueur, au profil de l'encadrement de glace.

4. Procédé selon la revendication 3, caractérisé en ce que la partie (8b) de l'armature de la seconde partie (7) du profilé non attenante à l'armature (8a) de la première partie formant pince est conformée par emboutissage au profil d'au moins un angle de l'encadrement de glace.

**Patentansprüche**

1. Profil für die Führung und Abdichtung einer beweglichen Scheibe (3), insbesondere einer Automobiltür, bestehend aus einem Elastomer (9), das auf einer metallischen Armierung (8) extrudiert ist, und einen ersten, einen Klemmteil (6) bildenden Abschnitt, der dafür geeignet ist, auf einem Einfassungsprofil (4) der beweglichen Scheibe befestigt zu werden, und einen zweiten U-förmigen Abschnitt (7) aufweist, der im entgegengesetzten Sinn zu dem ersten Abschnitt ausgerichtet ist und als Führungs- und Dichtungsorgan für die bewegliche Scheibe dient, wobei der Mittelschenkel des U des zweiten Abschnitts (7) einen Bereich ohne die metallische Armierung aufweist und ein weiches elastisches Scharnier (10) in dem Elastomer bildet, wobei das Profil dadurch gekennzeichnet ist, daß der Abschnitt (8b) der Armierung des zweiten Abschnitts (7). der nicht an die Armierung des ersten Abschnitts (6) angrenzt, der das Klemmprofil bildet, durch Tiefziehen bzw. Ausbauchen auf mindestens einem Teil seiner Länge an die Form der Scheibeneinfassung (4) angepaßt ist.

2. Profil nach Anspruch 1, dadurch gekennzeichnet, daß der Armierungsabschnitt (8b) des zweiten Abschnitts (7), der nicht an den Abschnitt (8a) der Armierung des ersten Abschnitts (6) des Profils angrenzt, durch Tiefzeihen bzw. Ausbauchen an die Form mindestens eine Ecke (5) der Türeinfassung angepaßt ist.

3. Verfahren zur Herstellung eines Profils nach Anspruch 1, bei welchem man ein Metallband (8), das für die Ausbildung der Armierung bestimmt ist, in die geeignete Form des Profils bringt, dieses Band in 2 Abschnitte (8a, 8b) an einer Stelle schneidet, die derjenigen des elastischen Scharniers (10) entsrpricht, und man das Elastomer (9) gleichzeitig auf den beiden Abschnitten (8a, 8b) in geeigneter benachbarter Stellung extrudiert, wobei das Verfahren dadurch gekennzeichnet ist, daß man nach dem Aushärten des Elastomers durch Tiefziehen bzw. Ausbauchen den Abschnitt (8b) der Armierung des zweiten Abschnitts (7), die nicht an die Armierung des Klemmabschnitts angrenzt, auf mindestens einem Abschnitt seiner Länge an das Profil der Scheibeneinfassung anpaßt.

4. Verfahren nach Anspruch 3, dadurch gekennzeichnet, daß der Abschnitt (8b) der Armierung des zweiten Abschnitts (7) des nicht an die Armierung (8a) des ersten Klemmabschnitts angrenzenden Profils durch Tiefziehen bzw. Ausbauchen an das Profils mindestens einer Ecke der Scheibeneinfassung angepaßt wird.

**Claims**

1. A shaped member for guiding and sealing a movable window (3), in particular for a motor vehicle door, formed by an elastomer (9) extruded over a metal reinforcement (8) and comprising a first part (6) forming a gripping portion capable of being fixed on the frame member (4) of the movable window, and a second part (7) of U-shaped section which is turned in the opposite direction to said first part and serves as a guide and sealing member for the movable window, the base of the U-shape of the second part (7) comprising a portion which is without any metallic reinforcement and which forms a flexible resilient hinge (10) in said elastomer, the shaped member being characterised in that the part (8b) of the reinforcement of the second part (7) which is not adjacent to the reinforcement of the first part (6) forming the gripping portion of the shaped member has been adapted in shape by pressing over at least a part of its length to the shape of the window frame (4).

2. A shaped member according to claim 1 characterised in that the part (8b) of the reinforcement of the second part (7) which is not adjacent the part (8a) of the reinforcement of the first part (6) of the shaped member has been adapted in shape by pressing to the shape of at least one angle (5) of the door frame.

3. A process for the production of a shaped member according to claim 1 wherein a metal strip (8) intended to form the reinforcement of the shaped member is put into the appropriate shape, said strip is cut into two portions (8a, 8b) at a location corresponding to that of the resilient hinge (10) and the elastomer (9) is simultaneously extruded over the two portions (8a, 8b) in a suitable contiguous position, said process being characterised in that, after hardening of the elastomer, the portion (8b) of the reinforcement of the second part (7) which is not adjacent the reinforcement of the part forming the gripping portion is adapted in shape by pressing over at least a part of its length to the profile of the window frame.

4. A process according to claim 3 characterised in that the part (8b) of the reinforcement of the second part (7) of the shaped member, which is not adjacent the reinforcement (8a) of the first part forming the gripping portion, is adapted in shape by pressing to the profile of at least one angle of the window frame.

**FIG.1**

**FIG.2**

FIG.3